# EUROPÄISCHE PATENTSCHRIFT

(11) **EP 1 508 540 B1**
(45) Veröffentlichungstag und Bekanntmachung des Hinweises auf die Patenterteilung: **08.11.2006**
(21) Anmeldenummer: 04008160.6
(22) Anmeldetag: 03.04.2004
(51) Int. Cl.: B65G 47/32

(54) **Vorrichtung zur Vereinzelung von Gefässen**
Device for separating vessels
Dispositif pour individualiser des vaisseaux

(30) Priorität: 20.08.2003 DE 10338862
(43) Veröffentlichungstag der Anmeldung: 23.02.2005
(73) Patentinhaber: UHLMANN PAC-SYSTEME GmbH & Co. KG, 88471 Laupheim (DE)
(72) Erfinder: Florczak, Werner, 88433 Schemmerhofen (DE); Amann, Sandra, 88471 Laupheim (DE); Habdank, Markus, 88471 Laupheim (DE); Damaschke, Norbert, 88451 Dettingen (DE); Weber, Markus, 88400 Biberach (DE)
(74) Vertreter: Hentrich, Swen

(56) Entgegenhaltungen:
- DE-A- 1 561 979
- DE-A- 3 409 225
- DE-A- 10 110 339
- FR-A- 2 160 229

## Beschreibung

Die Erfindung betrifft eine Vorrichtung zur Vereinzelung von Gefäßen wie Ampullen Vials, Karpulen, Flaschen oder dergl., mit einem die Gefäße von einer Zuführung durch eine Vereinzelungseinheit zu einer Abgabestation transportierenden Förderer, wobei der Förderer durch eine Vibrationsplatte gebildet ist, an deren in Förderrichtung stromab liegenden Ende eine drehend antreibbare Vereinzelungswalze angeordnet ist mit senkrecht zur Förderrichtung und parallel zur Vibrationsplatte liegender Drehachse, und wobei in der Oberfläche der Vereinzelungswalze mit gegenseitigem Abstand in Umfangsrichtung und in Richtung parallel zur Drehachse eine Mehrzahl von Gefäßaufnahmen ausgebildet ist.

Aus der Praxis sind Vorrichtungen bekannt, bei denen die Gefäße per Hand auf ein Transportband geschoben werden, das die stehenden Gefäße zu der Vereinzelungseinheit führt, wobei zwingend darauf zu achten ist, dass die Gefäße beispielsweise durch einen mit dem Transportband gekoppelten Schieber am Umfallen gehindert werden, um so durch die von einer Vereinzelungsschnecke gebildeten Vereinzelunseinheit separiert zu werden. Diese Vorrichtung hat sich als störanfällig erwiesen, da ein auf dem Transportband umfallendes Gefäß nicht nur seine eigene weitere Verarbeitung, sondern auch die benachbarter und nachfolgender Gefäße stört.

Aus der DE 1 561 979 A ist eine Vorrichtung der eingangs genannten Art bekannt, mit der ungeordnet herangeförderte Ampullen auf eine vibrationsplatte flach gelegt und vereinzelt werden. Diese Ampullen können zwei Orientierungen einnehmen, nämlich mit dem Kopf oder dem Boden in Förderrichtung voran ausgerichtet. Zur definierten, lagerichtigen Übergabe werden zwei Fallrohre genutzt, die die Ampulle je nach Schwerpunktlage entweder direkt auf ein Förderband geben oder mittels der Walze umdrehen und dann auf das Förderband abgeben.

Die DE 101 10 339 A1 nutzt zur Weitergabe von einer ersten Station an eine zweite Station einen Drehteller mit segamentartigen Formatteilen an seinem Umfang.

Der Erfindung liegt daher die Aufgabe zugrunde, eine Vorrichtung der eingangs genannten Art so auszubilden, dass stehende Gefäße verarbeitet werden können.

Diese Aufgabe wird bei einer Vorrichtung der eingangs genannten Art durch die kennzeichnenden Merkmale des Anspruchs 1 gelöst.

Mit dieser Vorrichtung ist der Vorteil verbunden, dass durch die Förderung mit Vibration kein Halter erforderlich ist, der die Gefäße am Umfallen hindert, die frei in die Vereinzelungseinheit gefördert werden. Die Vereinzelungseinheit ist durch eine Vereinzelungswalze gebildet, die durch eine Drehbewegung die stehend in die Gefäßaufnahme geförderten Gefäße in eine liegende Position überführt, in der die Gefäße einzeln durch die Abgabestation in eine Verpackung überführt werden können. Mittels der Drehung wird ein einzelnes Gefäß von den benachbarten Gefäßen getrennt, indem dieses angehoben wird, was sehr schonend für die Gefäße und darauf angebrachter Etiketten erfolgt infolge einer reduzierten Kontaktlänge und einer verminderten Reibung.

Im Rahmen der Erfindung bevorzugt ist es, wenn auf der Vibrationsplatte der Vereinzelungswalze ein Vereinzelungsrechen vorgelagert ist, dessen von den Zinken gebildeten Lücken mit den Gefäßaufnahmen der Vereinzelungswalze fluchten. Der Vereinzelungsrechen dient dazu, die Gefäße vor den Gefäßaufnahmen der Vereinzelungswalze auszurichten und eine seitliche Druckbeaufschlagung durch benachbarte Gefäße zu vermeiden, die eine präzise Zuführung der Gefäße in die Gefäßaufnahmen behindern könnte.

Wenn zur Bildung von Speicherkanälen die Zinken parallel zur Förderrichtung zu Platten erweitert sind, ergibt sich der Vorteil, dass ohne die Gefahr eines Gefäßstaus eine sichere Zuführung der Gefäße in die Gefäßaufnahmen erreicht ist, dass also mittels eines großen Füllgrades der Gefäßaufnahmen eine hohe Produktivität erreicht werden kann. Es hat sich als zweckmäßig erwiesen, wenn die Länge der Platten zur Aufnahme von bis zu 5 Gefäßen zwischen den Platten in dem Vereinzelungsrechen bemessen ist, da diese Länge genügend Speicherreserven bereit stellt, um stets ein Gefäß durch die Vibrationsplatte in die zugehörige Gefäßaufnahme der Vereinzelungswalze fördern zu können.

Im Rahmen der Erfindung ist weiterhin vorgesehen, dass die Gefäßaufnahmen tangential in die Oberfläche der Vereinzelungswalze eingebracht sind, da diese einfach herzustellende Gestaltung einen ruhigen, gleichmäßigen Übergang der Gefäße von der Vibrationsplatten in die Gefäßaufnahmen ermöglicht und vermeidet, dass die Gefäßaufnahmen zu tief in die Vereinzelungswalze eingeschnitten sein müssen.

Zum vereinfachten Zusammenwirken mit der Abgabestation ist es zweckmäßig, wenn die Vereinzelungswalze getaktet in Winkelschritten von 90° antreibbar ist, da so auch in der Abgabestation die Gefäße getaktet der Vereinzelungswalze entnommen und übergeben werden können.

Um die Stillstandszeit der Vereinzelungswalze in der Position der Gefäßübernahme von der Vibrationsplatte sowie die Beschleunigungs- und die Verzögerungszeiten für die Walzendrehung sowie die Stillstandzeit in der Abgabepostion einfach variieren zu können, ist der Vereinzelungswalze als Antrieb ein Servomotor zugeordnet.

Um einen Gefäßstau vor dem Vereinzelungsrechen zu vermeiden, dessen Zinken wie Brückenpfeiler im Gefäßstrom wirken, ist vor dem Vereinzelungsrechen, über der Vibrationsplatte ein Schieber angeordnet, der mit Schieberplatten in den Förderstrom der Gefäße reicht und senkrecht zur Förderrichtung verstellbar gelagert ist. Günstig ist dabei, wenn der Schieber pneumatisch oszillierend antreibbar ist.

Im Rahmen der Erfindung weiterhin vorgesehen ist, dass der Abgabestation ein Pick and Place-System wie ein Schwenkarmroboter oder ein Linearsystem zugeordnet ist zur Entnahme der Gefäße aus den Gefäßaufnahmen in der deren horizontaler Ausrichtung entsprechenden Drehlage.

Im folgenden wird die Erfindung an einem in der Zeichnung dargestellten Ausführungsbeispiel näher erläutert; es zeigen:
- Fig. 1: eine perspektivische Darstellung der erfindungsgemäßen Vorrichtung zur Vereinzelung von Gefäßen mit der Zuordnung zu einer Transporteinheit,
- Fig. 2: den Schnitt II - II aus Fig. 1,
- Fig. 3: in einer Seitenansicht eine schematische Darstellung der Übergabe eines durch eine Ampulle gebildeten Gefäßes von der Vibrationsplatte in die Gefäßaufnahmen der Vereinzelungswalze
- Fig. 4: eine perspektivische Darstellung des Gegenstandes der Fig. 3,

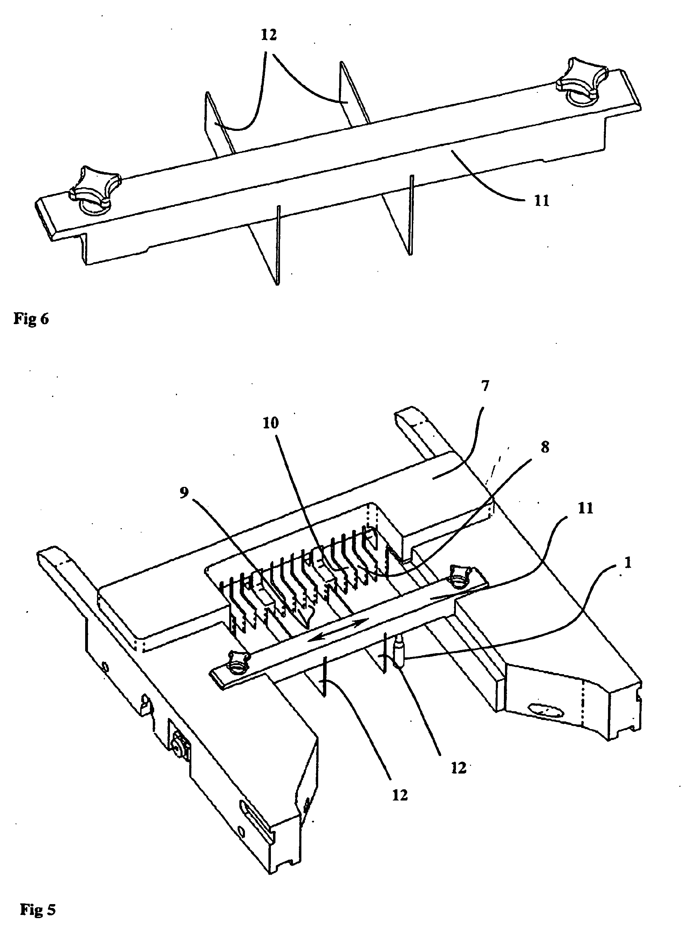

- Fig. 5: eine isolierte, perspektivische Darstellung des Vereinzelsungsrechens mit dem diesen vorgelagerten Schieber, und.
- Fig. 6: eine perspektivische, isolierte Darstellung des Schiebers.

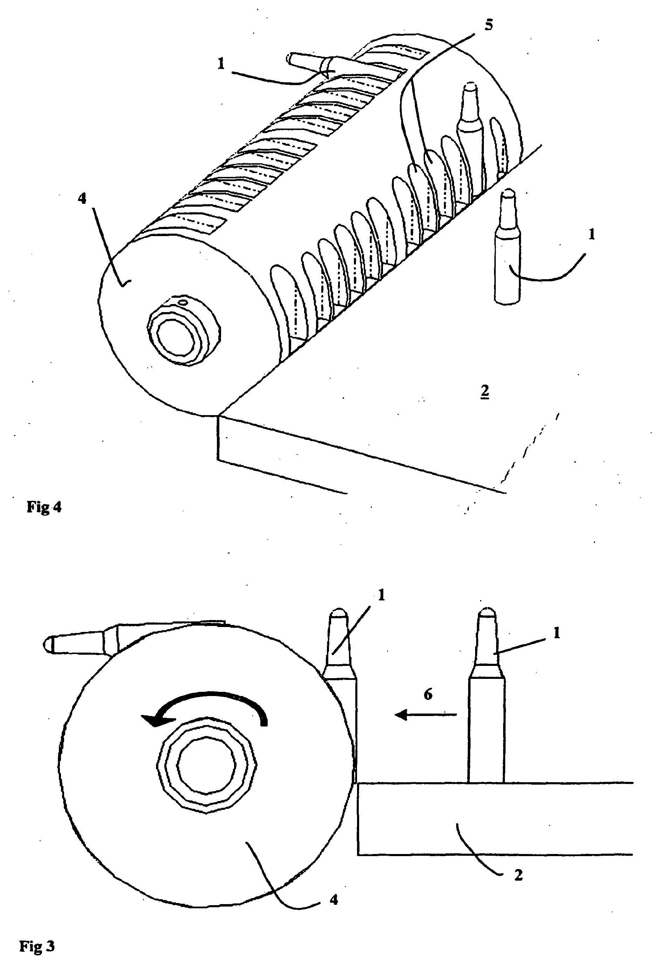

In der Zeichnung dargestellt ist eine Vorrichtung, die der Vereinzelung von Gefäßen 1 dient, die in der Zeichnung durch Ampullen dargestellt sind, aber auch in Form von Vials, Karpulen oder Flaschen vorliegen können. Die Vorrichtung umfasst einen durch eine Vibrationsplatte 2 gebildeten Förderer, der die Gefäße 1 von einer Zuführung 3 durch ein Vereinzelungseinheit zu einer Abgabestation transportiert. An dem in Förderrichtung (Pfeil 6) stromab liegenden Ende der Vibrationsplatte 2 ist eine drehend antreibbare Vereinzelungswalze 4 angeordnet mit senkrecht zur Förderrichtung und parallel zur Vibrationsplatte 2 liegend Drehachse. In der Oberfläche der Vereinzelungwalze 4 sind mit gegenseitigem Abstand in Umfangsrichtung und in Richtung parallel zur Drehachse in Reihen mehrere Gefäßaufnahmen 5 ausgebildet, in die die Gefäße von der Vibrationsplatte 2 transportiert werden (Fig. 3), wozu die Vereinzelungswalze 4 getaktet in Winkelschritten von 90° durch einen Servomotor antreibbar ist. Zur Übergabe der Gefäße 1 fluchtet der Boden der Gefäßaufnahme 5 mit der Oberfläche der Vibrationsplatte 2, so dass der Boden der Gefäßaufnahme 5 im nachfolgenden Takt im wesentlichen vertikal orientiert ist und in einfacher Weise ein der Abgabestation zugeordnetes Pick and Place-System wie ein Schwenkarmroboter oder ein Linearsystem die Gefäße 1 aus den Gefäßaufnahmen 5 entnehmen kann.

Um durch konstruktive Maßnahmen sicher zu stellen, dass stets ein Gefäß 1 in jede an der Vibrationsplatte 2 bereit stehende Gefäßaufnahme 5 überführt werden kann, ist auf de Vibrationsplatte 2 der Vereinzelungswalze 4 ein Vereinzelungsrechen 7 vorgelagert, dessen von den Zinken 8 gebildeten Lücken 9 mit den Gefäßaufnahmen 5 der Vereinzelungswalze 4 fluchten und so die Förderung der Gefäße 1 in die Gefäßaufnahme 5 kanalisieren. Bei dem in der Zeichnung dargestellten Ausführungsbeispiel sind die Zinken 8 zu Speicherkanälen erweitert durch eine entsprechende Bemessung der Länge der als Platten 10 gestalteten Zinken 8, die bis zu fünf Gefäßen 1 zwischen sich aufnehmen können. Vor dem Vereinzelungsrechen 7, über der Vibrationsplatte 2 ist ein Schieber 11 angeordnet, der mit Schieberplatten 12 in den Förderstrom der Gefäße 1 reicht senkrecht zur Förderrichtung 6 pneumatisch oszillierend antreibbar ist.

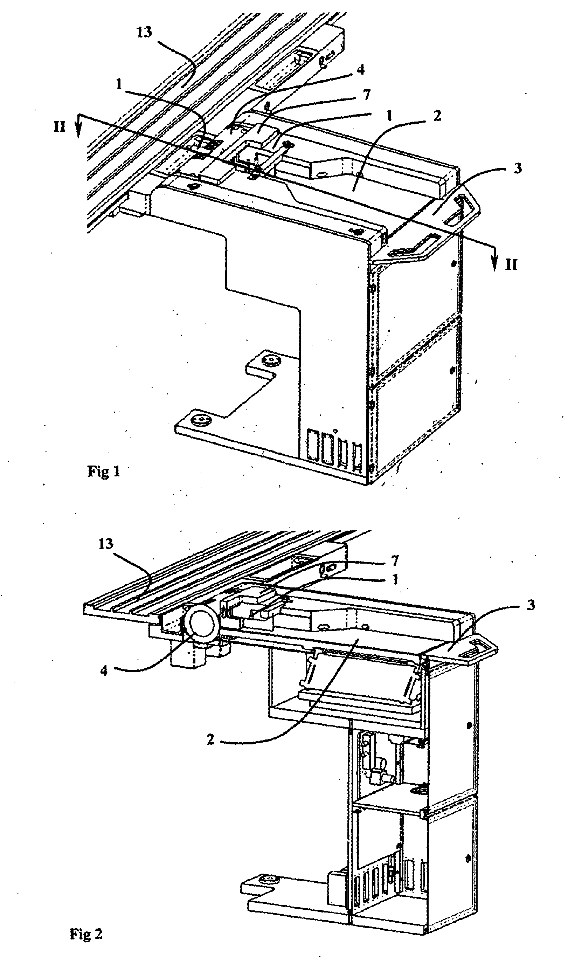

Die in Fig. 1 von rechts auf die Vibrationsplatte 2 aufgebrachten Gefäße 1 werden durch diese Vibrationsplatte schonend in Förderrichtung 6, in der Fig. 1 also nach links bewegt, ohne dass konstruktive Maßnahmen erforderlich sind, um ein Umfallen zu verhindern. Durch den senkrecht zur Förderrichtung 6 oszillierend bewegbaren Schieber 11 werden die Gefäße 1 zwischen die Zinken 8 des Vereinzelungsrechen transportiert und ein Stau vor deren Kanten vermieden. Exakt zur Lage der Gefäßaufnahmen 5 ausgerichtet werden die Gefäße 1 durch die Vibrationsplatte 2 in die Gefäßaufnahme einem ersten Takt gefördert, um nach einer Drehung um 90° in einem zweiten Takt durch einen in der Zeichnung selber nicht dargestellten Pick and Place-System einer Abgabestation entnommen und mittels eines Transportbandes 13 abtransportiert zu werden.

## Patentansprüche

1. Vorrichtung zur Vereinzelung von Gefäßen (1) wie Ampullen Vials, Karpulen, Flaschen oder dergl., mit einem die Gefäße (1) von einer Zuführung (3) durch eine Vereinzelungseinheit zu einer Abgabestation transportierenden Förderer, wobei der Förderer durch eine Vibrationsplatte (2) gebildet ist, an deren in Förderrichtung (6) stromab liegenden Ende eine drehend antreibbare Vereinzelungswalze (4) angeordnet ist mit senkrecht zur Förderrichtung und parallel zur Vibrationsplatte liegender Drehachse, und wobei in der Oberfläche der Vereinzelungswalze (4) mit gegenseitigem Abstand in Umfangsrichtung und in Richtung parallel zur Drehachse eine Mehrzahl von Gefäßaufnahmen (5) ausgebildet ist, **dadurch gekennzeichnet, dass** der Boden der Gefäßaufnahme (5) zur Übergabe der stehend geförderten Gefäße (1) mit der Oberfläche der Vibrationsplatte (2) fluchtet, an deren stromab liegenden Ende unmittelbar die Vereinzelungswalze (4) angeordnet ist.

2. Vorrichtung nach Anspruch 1, **dadurch gekennzeichnet, daß** auf der Vibrationsplatte (2) der Vereinzelungswalze ein Vereinzelungsrechen (7) vorgelagert ist, dessen von den Zinken (8) gebildeten Lücken (9) mit den Aufnahmen der Vereinzelungswalze (4) fluchten.

3. Vorrichtung nach Anspruch 2, **dadurch gekennzeichnet, daß** zur Bildung von Speicherkanälen die Zinken (8) parallel zur Förderrichtung zu Platten (10) erweitert sind.

4. Vorrichtung nach Anspruch 3, **dadurch gekennzeichnet, daß** die Länge der Platten (10) zur Aufnahme von bis zu fünf Gefäßen (1) zwischen den Platten (10) in dem Vereinzelungsrechen (7) bemessen ist.

5. Vorrichtung nach einem der Ansprüche 1 bis 4, **dadurch gekennzeichnet, daß** die Gefäßaufnahmen (5) tangential in die Oberfläche der Vereinzelungswalze (4) eingebracht sind.

6. Vorrichtung nach einem der Ansprüche 1 bis 5, **dadurch gekennzeichnet, daß** die Vereinzelungswalze (4) getakte in Winkelschritten von 90° antreibbar ist.

7. Vorrichtung nach einem der Ansprüche 1 bis 6, **dadurch gekennzeichnet, daß** der Vereinzelungswalze (4) als Antrieb ein Servomotor zugeordnet ist.

8. Vorrichtung nach einem der Ansprüche 2 bis 7, **dadurch gekennzeichnet, daß** vor dem Vereinzelungsrechen (7), über der Vibrationsplatte (2) ein Schieber (11) angeordnet ist, der mit Schieberplatten (12) in den Förderstrom der Gefäße reicht und senkrecht zur Förderrichtung (6) verstellbar gelagert ist.

9. Vorrichtung nach Anspruch 8, **dadurch gekennzeichnet, daß** der Schieber (11) pneumatisch oszillierend antreibbar ist.

10. Vorrichtung nach einem der Ansprüche 1 bis 9, **dadurch gekennzeichnet, daß** der Abgabestation ein Pick and Place-System zugeordnet ist zur Entnahme der Gefäße (1) aus den Gefäßaufnahmen (5) in der deren horizontaler Ausrichtung entsprechenden Drehlage.

## Claims

1. Device for isolating containers (1) such as ampoules, vials, carpules, bottles or similar, with a conveyor transporting the containers (1) from a feed device (3) through an isolating unit to a distribution station, wherein the conveyor is formed by a vibration plate (2) at the downstream end of which in conveyance direction (6) is arranged an isolating roller (4) drivable by rotation with an axis of rotation lying perpendicular to the conveyance direction and parallel to the vibration plate, and wherein a plurality of container compartments (5) is formed in the surface of the isolating roller (4) with reciprocal distance in peripheral direction and in the direction parallel to the axis of rotation, **characterized in that** the base of the container compartment (5) for the transfer for the containers (1) conveyed standing is flush with the surface of the vibration plate (2) at whose downstream end the isolating roller (4) is directly arranged.

2. Device according to claim 1, **characterized in that** there is arranged on the vibration plate (2) in front of the isolating roller an isolating rack (7) in which the gaps (9) formed by the prongs (8) are flush with the compartments of the isolating roller (4).

3. Device according to claim 2, **characterized in that** the prongs (8) are widened into panels (10) parallel to the conveyance direction in order to form storage channels.

4. Device according to claim 3, **characterized in that** the panels (10) are made long enough to house up to five containers (1) between the panels (10) in the isolating rack (7).

5. Device according to one of claims 1 to 4, **characterized in that** the container compartments (5) are incorporated tangentially into the surface of the isolating roller (4).

6. Device according to one of claims 1 to 5, **characterized in that** the isolating roller (4) can be driven in clock-pulsed 90° increments.

7. Device according to one of claims 1 to 6, **characterized in that** as drive means, the isolating roller (4) is allocated a servomotor.

8. Device according to one of claims 2 to 7, **characterized in that** there is arranged in front of the isolating rack (7), above the vibration plate (2), a slider (11) which extends with slider plates (12) into the stream of conveyed containers and is housed movable perpendicular to the conveyance direction (6).

9. Device according to claim 8, **characterized in that** the slider (11) can be driven pneumatically in oscillation.

10. Device according to one of claims 1 to 9, **characterized in that** the distribution station is allocated a pick-and-place system to remove the containers (1) from the container compartments (5) in the rotation position corresponding to their horizontal alignment.

## Revendications

1. Dispositif pour séparer des récipients (1) tels que des ampoules, des flacons, des carpules, des bouteilles ou analogues, comprenant un convoyeur transportant les récipients (1) d'un moyen d'amenée (3) à un poste de sortie en passant par une unité de séparation, le convoyeur étant formé par un plateau vibrant (2) dont l'extrémité située en aval par rapport à la direction de convoyage (6) est adjacente à un tambour séparateur entraîné en rotation (4) comportant un axe de rotation orienté perpendiculairement à la direction de convoyage et parallèlement au plateau vibrant, et dans la surface du tambour séparateur (4) étant ménagée une pluralité de réceptacles à récipients (5) disposés à distance les uns des autres dans la direction circonférentielle et dans la direction parallèle à l'axe de rotation, **caractérisé en ce que**, pour transmettre les récipients convoyés debout (1), le fond des réceptacles à récipients (5) est aligné avec la surface du plateau vibrant (2) dont l'extrémité située en aval est directement adjacente au tambour séparateur (4).

2. Dispositif selon la revendication 1, **caractérisé en ce que** sur le plateau vibrant (2) est disposé, en amont du tambour séparateur, un râteau séparateur (7) dont les intervalles (9) formés par les dents (8) coïncident avec les réceptacles du tambour séparateur (4).

3. Dispositif selon la revendication 2, **caractérisé en ce que** les dents (8) sont prolongées en forme de plaques (10) parallèlement à la direction de convoyage pour former des couloirs de regroupement.

4. Dispositif selon la revendication 3, **caractérisé en ce que** la longueur des plaques (10) du râteau séparateur (7) est calculée pour que celles-ci puissent recevoir entre elles jusqu'à cinq récipients (1).

5. Dispositif selon une des revendications 1 à 4, **caractérisé en ce que** les réceptacles à récipients (5) sont ménagés tangentiellement dans la surface du tambour séparateur (4).

6. Dispositif selon une des revendications 1 à 5, **caractérisé en ce que** le tambour séparateur (4) est entraîné de manière cadencée par pas angulaires de 90°.

7. Dispositif selon une des revendications 1 à 6, **caractérisé en ce qu'**un servomoteur est associé au tambour séparateur (4) pour entraîner celui-ci.

8. Dispositif selon une des revendications 2 à 7, **caractérisé en ce qu'**un poussoir (11) pénétrant à l'aide de plaques de poussée (12) dans le flux des récipients amenés et monté mobile perpendiculairement à la direction de convoyage (6) est disposé devant le râteau séparateur (7), au-dessus du plateau vibrant (2).

9. Dispositif selon la revendication 8, **caractérisé en ce que** le poussoir (11) est entraîné pneumatiquement de manière oscillante.

10. Dispositif selon une des revendications 1 à 9, **caractérisé en ce qu'**un système de transfert est associé au poste de sortie pour prélever les récipients (1) dans les réceptacles à récipients (5) dans la position de rotation correspondant à leur orientation horizontale.
